# EUROPÄISCHE PATENTSCHRIFT

(11) **EP 3 138 175 B1**
(45) Veröffentlichungstag und Bekanntmachung des Hinweises auf die Patenterteilung: **29.08.2018**
(21) Anmeldenummer: 15708802.2
(22) Anmeldetag: 05.03.2015
(51) Int. Cl.: H02J 1/14, B60R 16/03, B60R 16/033

(54) **ENERGIEÜBERTRAGUNGSVORRICHTUNG UND BORDNETZ**
POWER TRANSMISSION DEVICE AND VEHICLE ELECTRICAL SYSTEM
DISPOSITIF DE TRANSFERT D'ÉNERGIE ET RÉSEAU DE BORD

(30) Priorität: 29.04.2014 DE 102014207993
(43) Veröffentlichungstag der Anmeldung: 08.03.2017
(73) Patentinhaber: Robert Bosch GmbH, 70442 Stuttgart (DE)
(72) Erfinder: HORN, Matthias, 71229 Leonberg (DE); BOHNE, Christian, 70437 Stuttgart (DE)
(86) Internationale Anmeldenummer: PCT/EP2015/054679
(87) Internationale Veröffentlichungsnummer: WO 2015/165626

(56) Entgegenhaltungen:
- EP-A1- 2 200 146
- WO-A1-82/02523
- JP-A- H0 662 530
- US-A- 3 949 289

## Beschreibung

Die vorliegende Erfindung betrifft eine Energieübertragungsvorrichtung zum Einsatz in einem Bordnetz eines Fahrzeugs und ein Bordnetz mit einer solchen Energieübertragungsvorrichtung.

### Stand der Technik

Aufgrund der zunehmenden Elektrifizierung von Aggregaten sowie der Einführung von neuen Fahrfunktionen steigen die zuverlässigkeits Anforderung an die der elektrischen Energieversorgung in Fahrzeugen bzw. Kraftfahrzeugen.

Beim zukünftigen hochautomatischen Fahren sind fahrfremde Tätigkeiten in begrenztem Maße zulässig. Eine sensorische, regelungstechnische, mechanische und energetische Rückfallebene durch einen Fahrer ist in diesem Fall nur noch bedingt vorhanden. Das heutige konventionelle 14V-Bordnetz kann die erhöhten Anforderungen an die Zuverlässigkeit der elektrischen Versorgung nicht mehr in ausreichendem Maße erfüllen.

Die Energieverteilung in einem derartigen Bordnetz kann passiv über Sicherungskästen ohne Steuerungseingriff erfolgen. Eine Diagnose von Bordnetzoder Komponentenfehlern ist nicht vorgesehen. Somit können keine Maßnahmen getroffen werden, um eine Energieversorgung sicherheitsrelevanter Komponenten im Fehlerfall zur Fehlerkompensation sicherzustellen.

Die Druckschrift US 3 949 289 A beschreibt einen Schaltkreis für ein Kraftfahrzeug, wobei dieser Schaltkreis einen Startmortor des Kraftfahrzeugs mit einer Batterie des Kraftfahrzeugs und einer Batterie eines Wohnwagens, der mit dem Kraftfahrzeug zu verbinden ist, zu verbinden ist. Dabei ist der Startermotor über den Schaltkreis zum Durchführen eines Startvorgangs mit mindestens einer der beiden Batterien zu verbinden.

Ein System zum Betreiben von Geräten eines Kraftfahrzeugs ist in der Druckschrift WO 82/02523 A1 beschrieben. Dabei ist dieses System durch einen Generator mit elektrischer Energie zu versorgen und diese Energie an mindestens ein Gerät weiterzuleiten.

Aus der EP 1 054 789 B1 ist ein Verfahren zum Ein- und Ausschalten von Verbrauchern bekannt, bei dem einem Steuergerät die erforderlichen Informationen, die die vorliegenden Betriebszustände der Verbraucher erkennen lassen, zugeführt werden.

Ein Verbraucher für die Innenraumbeleuchtung kann an einem "Body Computer Module (BCM)" angeschlossen werden. Hierbei kann der Verbraucher über eine Endstufe angesteuert werden. Fällt bspw. eine Glühlampe des Verbrauchers aus, kann dies von der Endstufe erfasst und dem Fahrzeugführer gemeldet werden.

Es besteht daher weiterhin der Bedarf daran, die Zuverlässigkeit der elektrischen Energieversorgung sicherheitsrelevanter Komponenten zu steigern.

### Offenbarung der Erfindung

Vor diesem Hintergrund schlägt die vorliegende Erfindung eine Energieübertragungsvorrichtung mit den Merkmalen des Patentanspruchs 1 vor.

### Vorteile der Erfindung

Ein wesentlicher Aspekt der vorliegenden Erfindung besteht darin, dass eine Energieübertragungsvorrichtung bereitgestellt wird, die eine Versorgung von Verbrauchern mit elektrischer Energie wahlweise über einen ersten Kanal, der mit einem ersten Eingangsanschluss der Energieübertragungsvorrichtung elektrisch leitend verbunden ist, und/oder über einen zweiten Kanal der Energieübertragungsvorrichtung, der mit einem zweiten Eingangsanschluss elektrisch leitend verbunden ist, ermöglicht. Dies steigert die Zuverlässigkeit der elektrischen Energieversorgung sicherheitsrelevanter Komponenten und erhöht damit insgesamt die Betriebssicherheit. Die Auswahl des Eingangsanschlusses erfolgt mittels eines Eingangsschaltmittels. Die Energieübertragungsvorrichtung weist wenigstens einen, vorzugsweise wenigstens zwei Ausgangsanschlüsse auf, an die mittels Ausgangsleitungen ein oder mehrere Verbraucher angeschlossen werden können.

Gemäß einer Ausführungsform ist das Eingangsschaltmittel als Wechselschalter ausgebildet. Der Wechselschalter stellt eine elektrisch leitende Verbindung entweder mit dem ersten Eingangsanschluss oder dem zweiten Eingangsanschluss her. Das Auftrennen einer elektrisch leitenden Verbindung an dem einen Eingangsanschluss geht mit einem elektrisch leitfähigen Verbinden des anderen Eingangsanschlusses einher. Somit kann eine Versorgung der Verbraucher mit elektrischer Energie über den ersten Kanal oder den zweiten Kanal, jedoch nicht über beide Kanäle gleichzeitig erfolgen.

Gemäß einer weiteren Ausführungsform ist die Energieübertragungsvorrichtung ausgebildet, auf das Erfassen eines Unterschreitens eines Grenzwerts für die Höhe einer elektrischen Spannung und/oder für die Stärke eines elektrischen Stromes an dem ersten Eingangsanschluss und/oder dem zweiten Eingangsanschluss hin, das Eingangsschaltmittel derart anzusteuern, dass ein Wechsel von dem ersten Eingangsanschluss zu dem zweiten Eingangsanschluss oder umgekehrt durchgeführt wird. Hierzu erfasst z.B. eine Messeinrichtung der Energieübertragungsvorrichtung die elektrische Spannung und/oder den elektrischen Strom auf dem ersten Kanal und/oder dem zweiten Kanal, während z.B. eine Steuerungseinrichtung die erfassten Werte für die elektrischen Spannungen und/oder den elektrischen Ströme mit Grenzwerten vergleicht und auf das Ergebnis des Vergleichs hin einen Wechsel von z.B. dem ersten Kanal zu dem zweiten Kanal bewirkt. Somit sind keine weiteren Bauteile notwendig, um einen Wechsel von dem ersten Kanal zum zweiten Kanal oder umgekehrt zu bewirken.

Gemäß einer weiteren Ausführungsform ist dem wenigstens einen Ausgangsanschluss ein Ausgangsschalter zum Unterbrechen der Verbindung und damit der Versorgung mit elektrischer Energie von je einem Verbraucher zugeordnet. Hierdurch wird erreicht, dass eine Ausgangsleitung zur Versorgung von Verbrauchern im Fehlerfall mittels des Ausgangsschalters unterbrochen werden kann, während die Energieversorgung der restlichen Verbraucher von dem Fehlerfall unbeeinflusst bleibt. Somit ist die Zuverlässigkeit der Energieversorgung gesteigert. Bei dem Ausgangsschalter kann es sich vorzugsweise um einen mechanischen Schalter oder um einen elektronischen Halbleiterschalter handeln.

Gemäß einer weiteren Ausführungsform ist die Energieübertragungsvorrichtung zur sternförmigen Versorgung der Verbraucher mit elektrischer Energie ausgebildet. Hierdurch wird eine besonders einfache Versorgung der Verbraucher mit elektrischer Energie ohne Bussystem möglich.

Gemäß der Erfindung weist die Energieübertragungsvorrichtung eine Messeinrichtung auf, die zum Erfassen eines Kurzschluss zwischen dem wenigstens einen Ausgangsanschluss und einem Spannungsversorgungspotential (üblicherweise mit V+, V- und/oder GND bzw. Masse bezeichnet), und/oder einer Unterbrechung einer an dem wenigstens einen Ausgangsanschluss angeschlossenen elektrischen Leitung ("offener Ausgang"), und/oder zwischen mehreren Ausgangsanschlüssen (soweit die Energieübertragungsvorrichtung wenigstens zwei Ausgangsanschlüsse aufweist) ausgebildet ist, wobei die Energieübertragungsvorrichtung eine Steuerungseinrichtung aufweist, die dazu eingerichtet ist, auf Erfassen des Kurzschlusses und/oder der Unterbrechung hin den jeweiligen Ausgangsschalter, der dem betroffenen Ausgangsanschluss zugeordnet ist, zu öffnen. Hierzu erfasst die Messeinrichtung z.B. die Höhe der elektrischen Spannung und/oder die Stärke des elektrischen Stromes an dem Ausgangsanschluss, während die Steuerungseinrichtung die erfassten Werte für die elektrische Spannung und/oder den elektrischen Strom mit einem Grenzwert oder Grenzwerten vergleicht und auf das Ergebnis des Vergleichs hin einen Kurzschluss und/oder eine Unterbrechung feststellt. Somit sind keine weiteren Bauteile notwendig zur Erfassung eines Kurzschlusses und/oder einer Unterbrechung.
Gemäß einer weiteren Ausführungsform weist die Energieübertragungsvorrichtung einen Pufferspeicher zur zumindest zeitweisen Versorgung zumindest der Energieübertragungsvorrichtung mit elektrischer Energie auf. Der Pufferspeicher kann eine Batterie, ein Kondensator oder ein wiederaufladbarer Akkumulator sein. Durch den Pufferspeicher wird z.B. die Steuerungseinrichtung und/oder Messeinrichtung der Energieübertragungsvorrichtung auch dann mit elektrischer Energie versorgt, wenn keine externe elektrische Energie zum Betrieb der Energieübertragungsvorrichtung zur Verfügung steht, z.B. während eines Wechsels von dem ersten Kanal zum dem zweiten Kanal oder umgekehrt.

Gemäß einer weiteren Ausführungsform ist die Energieübertragungsvorrichtung dazu ausgebildet, einen Verbraucher zweikanalig über zwei Ausgangsanschlüsse der Energieübertragungsvorrichtung mit elektrischer Energie zu versorgen. Dabei wird unter einer zweikanaligen Versorgung verstanden, dass der Verbraucher wahlweise entweder über den ersten oder den zweiten Kanal, oder gleichzeitig über beide Kanäle mit elektrischer Energie versorgt wird. Hierdurch wird die Betriebssicherheit nochmals gesteigert, da ein Verbraucher redundant zweikanalig mit elektrischer Energie versorgt wird.

Gemäß einer weiteren Ausführungsform weist die Energieübertragungsvorrichtung zumindest zwei Ausgangsschalter auf, die als ein Wechselschalter zur zweikanaligen Versorgung eines Verbrauchers mit elektrischer Energie konfigurierbar ausgebildet sind. Somit kann im Bedarfsfall die Energieübertragungsvorrichtung zur zweikanaligen Versorgung eines Verbrauchers konfiguriert werden. Dabei bewirken die zwei zu einem Wechselschalter konfigurierten Ausgangsschalter, dass der Verbraucher entweder über einen ersten Ausgangsschalter oder einen zweiten Ausgangsschalter mit elektrischer Energie versorgt wird. Daher ist die Energieübertragungsvorrichtung besonders flexibel einsetzbar. Bei dem Wechselschalter kann es sich vorzugsweise um einen mechanischen Schalter oder um einen elektronischen Halbleiterschalter handeln.

Gemäß einer weiteren Ausführungsform ist dem wenigsten einen Ausgangsanschluss ein Stromrichtelement, insbesondere eine Diode, zugeordnet. Dies erlaubt, ein Rückspeisen (z.B. durch Überspannung in einem Verbraucher) zu verhindern, und schützt somit die restlichen Verbraucher vor dieser Überspannung.

Vorzugsweise weist die Energieübertragungsvorrichtung auch eine Datenschnittstelle, insbesondere für Bus-Kommunikationssystem, wie z.B. CAN, auf, über welche eine Steuerungseinrichtung der Energieübertragungsvorrichtung mit anderen Steuergeräten kommunizieren kann, insbesondere um Befehle, Statusmeldungen usw. auszugeben oder entgegenzunehmen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Beispielsweise kann die vorliegende Erfindung sinngemäß auch bei batteriegetriebenen Fahrzeugen ohne Verbrennungsmotor eingesetzt werden.

Die Erfindung ist anhand von Ausführungsbeispielen in der Zeichnung schematisch dargestellt und wird im Folgenden unter Bezugnahme auf die Zeichnung ausführlich beschrieben.

Kurze Beschreibung der Zeichnung
- Figur 1: zeigt ein Ausführungsbeispiel eines erfindungsgemäßen Bordnetzes in schematischer Darstellung.
- Figur 2: zeigt ein Ausführungsbeispiel einer erfindungsgemäßen Energieübertragungsvorrichtung zur Versorgung von Verbrauchern des Bordnetzes in der Figur 1 in schematischer Darstellung.

In den Figuren sind gleiche oder einander entsprechende Elemente mit gleichen Bezugszeichen angegeben. Auf eine wiederholte Erläuterung wird verzichtet.

### Ausführungsform(en) der Erfindung

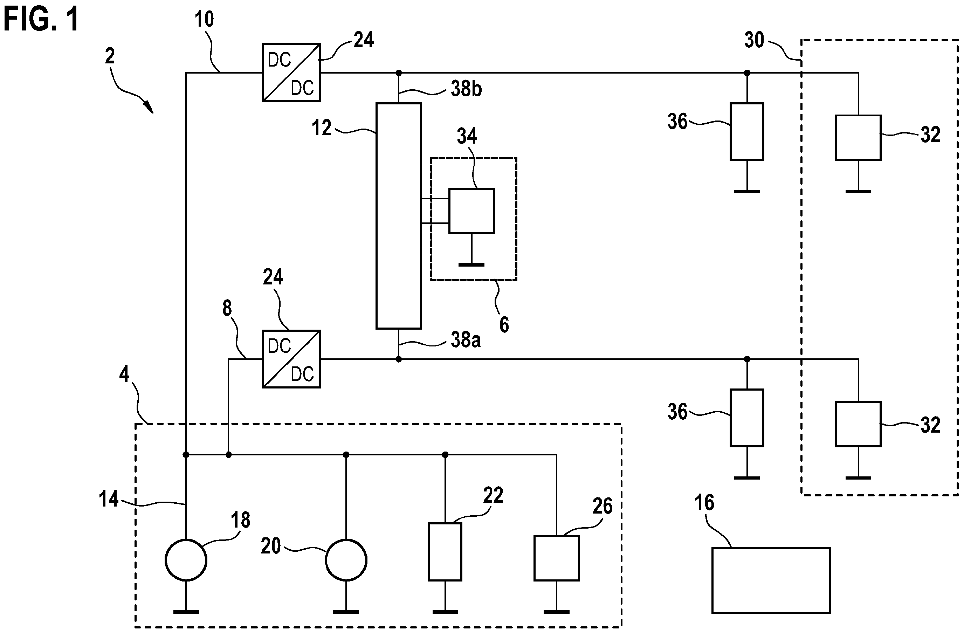

In Figur 1 ist ein Ausführungsbeispiel eines erfindungsgemäßen Bordnetzes 2 dargestellt. Das Bordnetz 2 kann insbesondere Teil eines Kraftfahrzeugs sein. Das Bordnetz 2 umfasst beispielhaft ein Basisbordnetz 4. Im vorliegenden Ausführungsbeispiel umfasst das Basisbordnetz 4 eine elektrische Maschine 18. Die elektrische Maschine 18 kann im vorliegenden Ausführungsbeispiel motorisch betrieben werden, um als Antrieb genutzt zu werden, und/oder generatorisch betrieben werden, um elektrische Energie zu erzeugen. Hierzu ist eine entsprechend ausgebildete Leistungselektronik (nicht dargestellt) vorgesehen. Im generatorischen Betrieb wird die elektrische Maschine 18 von einem Verbrennungsmotor des Fahrzeugs angetrieben. Im motorischen Betrieb kann die elektrische Maschine 18 das Fahrzeug antreiben.

Im Basisbordnetz 4 sind im vorliegenden Ausführungsbeispiel zu der elektrischen Maschine 18 ein Starter 20, eine wiederaufladbare Batterie 22 und eine Basisbordnetzverbrauchergruppe 26 über eine Verbindungsleitung 14 elektrisch parallel geschaltet. Der Starter 20 ist im vorliegenden Ausführungsbeispiel zum Starten einer Brennkraftmaschine eines Kraftfahrzeugs ausgebildet. In der wiederaufladbaren Batterie 22 kann elektrische Energie, die von der elektrischen Maschine 18 im generatorischen Betrieb erzeugt wurde, gespeichert werden. So kann die Basisbordnetzverbrauchergruppe 26 des Basisbordnetzes 4 sowohl von der elektrischen Maschine 18 im generatorischen Betrieb als auch von der wiederaufladbaren Batterie 22 mit elektrischer Energie versorgt werden. Somit bilden im vorliegenden Ausführungsbeispiel sowohl die elektrische Maschine 18 im generatorischen Betrieb als auch die wiederaufladbare Batterie eine Energiequelle. Die Basisbordnetzverbrauchergruppe 26 kann einen oder eine Mehrzahl von elektrischen Verbrauchern umfassen.

Über die Verbindungsleitung 14 sind elektrisch leitend mit dem Basisbordnetz 4 und damit mit der Energiequelle ein erster Kanal 8 und ein zweiter Kanal 10 (Energieversorgungskanäle) verbunden.

Sowohl dem ersten Kanal 8 als auch dem zweiten Kanal 10 sind im vorliegenden Ausführungsbeispiel je ein DC/DC-Wandler 24, mit der Aufgabe der Spannungswandlung und Entkopplung der Kanäle 8, 10 vom Basisbordnetz 4, zugeordnet. Alternativ oder zusätzlich können dem ersten Kanal 8 als auch dem zweiten Kanal 10 je ein Schaltelement (nicht dargestellt), wie z.B. ein Halbleiterschalter oder ein Relais zugeordnet sein, mit denen der ersten Kanal 8 und/oder der zweite Kanal 10 elektrisch vom Basisbordnetz 4 bzw. dem jeweils anderen Kanal 8 bzw. 10 abgekoppelt werden können.

Im vorliegenden Ausführungsbeispiel ist mit dem ersten Kanal 8 und mit dem zweiten Kanal 10 je ein Energiespeicher 36 einkanalig verbunden. D.h. jeder Energiespeicher 36 ist nur mit dem ersten Kanal 8 oder nur mit dem zweiten Kanal 10 elektrisch leitend verbunden. Die Energiespeicher 36 können eine wiederaufladbare Batterie oder einen Kondensator, wie z.B. einen Doppelschichtkondensator, aufweisen. An einer ersten Anschlussleitung 38a, die mit dem ersten Kanal 8 verbunden ist, und an einer zweiten Anschlussleitung 38b, die mit dem zweiten Kanal 10 verbunden ist, ist eine Energieübertragungsvorrichtung 12 angeschlossen. Somit ist die Energieübertragungsvorrichtung 12 über die beiden Kanäle 8, 10 eingangsseitig zweikanalig mit dem Bordnetz 2 verbunden. Ausgangsseitig ist an der Energieversorgungsvorrichtung 12 eine Verbrauchergruppe 6 mit einem oder mehreren sicherheitsrelevanten Verbrauchern 34 angeschlossen. Bei einem sicherheitsrelevanten Verbraucher 34 handelt es sich z.B. um ein Steuergerät zur Ansteuerung sicherheitsrelevanter elektrischer Sensoren und/oder Aktoren, oder einfach vorhandene sicherheitsrelevante Sensoren und/oder Aktuatoren. Der sicherheitsrelevante Verbraucher 34 ist z.B. für die Bereitstellung von automatischen Fahrfunktionen ausgebildet. Daher ist eine besonders zuverlässige Versorgung des sicherheitsrelevanten Verbrauchers 34 mit elektrischer Energie sicherzustellen.

Im Fall eines Ausfalles des Basisbordnetzes 4 kann mithilfe der Energiespeicher 36 die Versorgung der Verbrauchergruppe 6 mit sicherheitsrelevanten Verbrauchern 34 sichergestellt werden. In diesem Fall werden die Kanäle 8 bzw. 10 vom Basisbordnetz 4 über die Schaltelemente bzw. DC/DC-Wandler 24 abgekoppelt.

Ferner sind im vorliegenden Ausführungsbeispiel mit dem ersten Kanal 8 und mit dem zweiten Kanal 10 je ein redundanter (also mehrfach, hier zweifach vorhandener) Verbraucher 32 einer redundanten Verbraucherbaugruppe 30 einkanalig verbunden. D.h., die redundante Verbraucherbaugruppe 30 ist über den ersten Kanal 8 und über den zweiten Kanal 10 elektrisch leitend mit dem Basisbordnetz verbunden, jeder der redundanten Verbraucher 32 ist jedoch nur über genau einen Kanal 8, 10 verbunden. Ein redundanter Verbraucher 32 kann insbesondere ein sicherheitsrelevanter elektrischer Sensor oder Aktuator sein, z.B. einer zweikreisigen, elektrisch aktivierbaren Bremse eines Kraftfahrzeugs, dessen Funktionalität auch bei einer Unterbrechung eines Kanals und bei Defekt eines der Verbraucher 32 selbst weiterhin gegeben sein soll.

Außerdem ist im vorliegenden Ausführungsbeispiel dem Bordnetz 2 eine Fehlererfassungseinrichtung 16 zugeordnet. Die Fehlererfassungseinrichtung 16 ist mit einer oder mehreren Einrichtungen zum Erfassen von Fehlern im Basisbordnetz, der Kanäle 8 und 10 oder der Verbraucher 32 ausgestattet, um Fehler wie Überspannung, Unterspannung, Kurzschlüsse oder Leitungsunterbrechungen erkennen zu können. Die Fehlererfassungseinrichtung 16 ist ferner über Steuerleitungen (nicht dargestellt) mit den DC/DC-Wandlern 24 elektrisch leitend verbunden, um diese im Fehlerfall so anzusteuern, dass die Versorgung der Verbrauchergruppe 30 im Fehlerfall sichergestellt ist. Dies kann beispielweise, wie beschrieben, durch Abkoppeln der Kanäle 8 und/oder 10 vom Basisbordnetz geschehen.

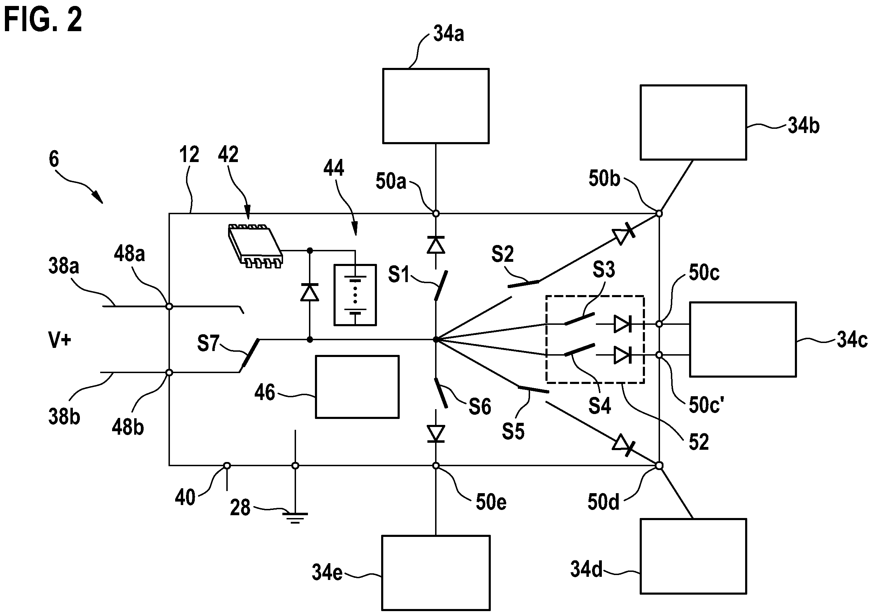

Die Figur 2 zeigt, dass die Verbrauchergruppe 6 im vorliegenden Ausführungsbeispiel fünf sicherheitsrelevante Verbraucher 34a, 34b, 34c, 34d, 34e aufweist. Bei den Verbrauchern 34a, 34b, 34c, 34d, 34e handelt es sich im vorliegenden Ausführungsbeispiel um Komponenten, die für die Bereitstellung von automatischen Fahrfunktionen ausgebildet sind und daher besonders zuverlässig mit elektrischer Energie versorgt werden müssen, z.B. ein Steuergerät zur Ansteuerung sicherheitsrelevanter elektrischer Sensoren und/oder Aktuatoren, oder sicherheitsrelevante Sensoren und/oder Aktuatoren.

Die Energieübertragungsvorrichtung 12 weist im vorliegenden Ausführungsbeispiel zwei Eingangsanschlüsse 48a, 48b auf, die elektrisch leitend jeweils mit den beiden Kanälen 8, 10 (welche hier auf einem Spannungsversorgungspotential V+ liegen) verbunden sind. Des Weiteren weist die Energieübertragungsvorrichtung 12 im vorliegenden Ausführungsbeispiel sechs Ausgangsanschlüsse 50a, 50b, 50c, 50c', 50d, 50e auf.

Somit ist die Energieübertragungsvorrichtung 12 eingangsseitig mit dem ersten Kanal 8 und mit dem zweiten Kanal 10 zur zweikanaligen Übertragung elektrische Energie verbunden. Ferner zeigt die Figur 2, dass mit der Energieübertragungsvorrichtung 12 die Verbraucher 34a, 34b, 34d, 34e zur einkanaligen Übertragung mit elektrischer Energie verbunden sind, während über die beiden Ausgangsanschlüsse 50c, 50c' der Verbraucher 34c zur zweikanaligen Übertragung von elektrische Energie verbunden ist. Des Weiteren weist im vorliegenden Ausführungsbeispiel die Energieübertragungsvorrichtung 12 einen Masseanschluss 28 und eine Schnittstelle 40 zu einem Fahrzeugbus, wie z.B. einem CAN-Bus, auf. Alternativ kann die Schnittstelle 40 auch LIN- oder Ethernet-kompatibel ausgebildet sein.

Die Energieübertragungsvorrichtung 12 weist eine Steuerungseinrichtung 42 auf, die im vorliegenden Ausführungsbeispiel einen µController aufweist. Zur Versorgung der Steuerungseinrichtung 42 mit elektrischer Energie im Fall eines Einbruchs der Versorgungsspannung weist die Energieübertragungsvorrichtung 12 ferner einen Pufferspeicher 44 auf.

Ferner weist die Energieübertragungsvorrichtung 12 im vorliegenden Ausführungsbeispiel sechs Ausgangsschalter S1, S2, S3, S4, S5, S6 auf, mit denen die Ausgangsanschlüsse 50a, 50b, 50c, 50c', 50d, 50e von einer Versorgung mit elektrischer Energie abgetrennt werden können. Die an die Ausgangsanschlüsse 50a, 50b, 50c, 50c', 50d, 50e angeschlossenen elektrischen Leitungen verbinden sternförmig die Energieübertragungsvorrichtung 12 mit den Verbrauchern 34a, 34b, 34c, 34d, 34e. Die Ausgangsschalter S1, S2, S3, S4, S5, S6 können mechanische Schalter oder Halbleiterschalter sein. Des Weiteren ist im vorliegenden Ausführungsbeispiel jeder Ausgangsleitung eine Schutzdiode zum Schutz der Energieübertragungsvorrichtung 12 zugeordnet. Dies erlaubt, ein Rückspeisen (z.B. durch Überspannung in einem der Verbraucher 34a, 34b, 34c, 34d, 34e) zu verhindern, und schützt somit die restlichen Verbraucher vor dieser Überspannung.

Die Steuerungseinrichtung 42 steht über nicht dargestellte Steuerleitungen mit den Ausgangsschaltern S1, S2, S3, S4, S5, S6 derart in Wirkverbindung, dass die Steuerungseinrichtung 42 jeden der Ausgangsschalter S1, S2, S3, S4, S5, S6 wahlfrei öffnen oder schließen kann.

Schließlich weist die Energieübertragungsvorrichtung 12 eine Messeinrichtung 46 auf. Die Messeinrichtung 46 ist im vorliegenden Ausführungsbeispiel zum Messen von elektrischer Spannung und/oder elektrischem Strom ausgebildet. Mit der Messeinrichtung 46 können Kurzschlüsse untereinander bzw. nach V+ und/oder Masse und/oder Leitungsunterbrechungen der Ausgangsleitungen erfasst werden.

Die Steuerungseinrichtung 42 ist dazu eingerichtet, im Betrieb über nicht darstellte Signalleitungen einen Messwert aus der Messeinrichtung 46 auszulesen und dahingehend auszuwerten, ob ein Kurzschluss zwischen einem der Ausgangsanschlüsse 50a, 50b, 50c, 50c', 50d, 50e und Masse und/oder eine Unterbrechung einer an einem der zumindest zwei Ausgangsanschlüsse 50a, 50b, 50c, 50c', 50d, 50e angeschlossenen elektrische Leitung vorliegt. Wenn dies der Fall ist, steuert im Betrieb die Steuerungseinrichtung 42 den jeweiligen Ausgangsschalter S1, S2, S3, S4, S5, S6 an, um die an dem betroffenen Ausgangsanschluss (50a, 50b, 50c, 50c', 50d, 50e) angeschlossene Leitung zu unterbrechen. Die anderen Ausgangsschalter S1, S2, S3, S4, S5, S6 bleiben jedoch unverändert. So bleibt die Energieversorgung der restlichen Verbraucher 34a, 34b, 34c, 34d, 34e von dem Fehlerfall unbeeinflusst.

Wenn hingegen, wie im Fall des Verbrauchers 34c, eine zweikanalige Versorgung vorgesehen ist, steuert die Steuerungseinrichtung 42 normalerweise die Ausgangsschalter S3 und S4 so an, dass nur einer der beiden Ausgangsschalter S3 und S4 geschlossen ist, während der andere der Ausgangsschalter S3 und S4 geöffnet ist. Somit sind im vorliegenden Ausführungsbeispiel die beiden Ausgangsschalter S3 und S4, die den Ausgangsanschlüssen 48c, 48c' zugeordnet sind, als ein Wechselschalter 52 konfiguriert. Im Fehlerfall wird auf den jeweils anderen der Ausgangsanschlüsse 48c, 48c' umgeschaltet.

Die Energieübertragungsvorrichtung 12 weist ferner ein Eingangsschaltmittel S7 auf. Mit dem Eingangsschaltmittel S7 kann ausgewählt werden, ob eine Energieversorgung mit elektrischer Energie über den ersten Kanal 8 oder den zweiten Kanal 10 erfolgen soll. Hierzu ist im vorliegenden Ausführungsbeispiel das Eingangsschaltmittel S7 als Wechselschalter ausgebildet. So ist sichergestellt, dass keine gleichzeitige Versorgung über den ersten Kanal 8 und den zweiten Kanal 10 erfolgt. Dies ermöglicht ein Umschalten der Versorgung im Fehlerfall. Der Wechselschalter kann ein mechanischer Schalter oder ein Halbleiterschalter sein.
Im Betrieb erfolgt die Auswahl, ob eine Energieversorgung über den ersten Kanal 8 oder den zweiten Kanal 10 erfolgt. Zur Auswahl des ersten Kanals 8 oder des zweiten Kanals 10 wird mit einer Messeinrichtung 46 die Höhe der über den ersten Kanal 8 und den zweiten Kanal verfügbaren elektrischen Spannung und/oder die Stärke des elektrischen Stromes erfasst. Hierzu ist die Messeinrichtung 46 zur Messung der über den ersten Kanal 8 und zweiten Kanal 10 verfügbaren elektrischen Spannung und/oder des elektrischen Stromes ausgebildet. Die Steuerungseinrichtung 42 ist zum Vergleichen des Messergebnisses mit einem unteren Grenzwert für die elektrische Spannung und/oder für den elektrischen Strom ausgebildet. Unterschreitet die Messspannung einen unteren Grenzwert, wird ein Versorgungsspannungsfehler angenommen und von dem aktuellen Kanal zum anderen Kanal gewechselt. Alternativ kann ein Signal zum Wechsel von dem einen Kanal zum anderen Kanal auch über den Fahrzeugbus von einem übergeordneten Energiemanagement des Fahrzeugs zur Energieübertragungsvorrichtung 12 übermittelt werden.
Ebenso kann eine zweikanalige Energieversorgung über den ersten Kanal 8 und den zweiten Kanal 10 gleichzeitigt erfolgen, wobei nur im Fehlerfall ein fehlerhafter Kanal getrennt wird.
Gemäß einer weiteren Ausführungsform ist die Energieübertragungsvorrichtung 12 nicht wie in der Figur 2 gezeigt als separates Bauteil ausgebildet, sondern z.B. in den Verbraucher 34c integriert. Die Ausgangsleitungen erstrecken sich in diesem Fall sternförmig von dem Verbraucher 34c zu den anderen Verbrauchern 34a, 34b, 34d, 34e. Diese Ausführungsform eignet sich besonders als Sonderausstattung für Fahrzeuge und weist eine hohe Integrationsdichte auf. Vorteilhaft ist auch eine Integration in einen oder mehrere der Basisbordnetzverbraucher der Basisbordnetzverbrauchergruppe 26, insbesondere in das sog. Body-Steuergerät (oder ein anderes Steuergerät).

## Patentansprüche

1. Energieübertragungsvorrichtung (12) mit zumindest einem ersten Eingangsanschluss (48a) und einem zweiten Eingangsanschluss (48b) zur zumindest zweikanaligen Zufuhr elektrischer Energie zur Energieübertragungsvorrichtung (12), und mit wenigstens einem Ausgangsanschluss (50a, 50b, 50c, 50c', 50d, 50e) zur Weiterleitung der elektrischen Energie zu Verbrauchern (34a, 34b, 34c, 34d, 34e), wobei die Energieübertragungsvorrichtung (12) ein Eingangsschaltmittel (S7) aufweist, das zum elektrisch leitenden Verbinden des ersten Eingangsanschlusses (48a) und/oder des zweiten Eingangsanschlusses (48b) mit dem wenigstens einen Ausgangsanschluss (50a, 50b, 50c, 50c', 50d, 50e) ausgebildet ist, wobei die Energieübertragungsvorrichtung (12) eine Steuerungseinrichtung (42) aufweist, die den Betrieb der Energieübertragungsvorrichtung (12) steuert, wobei die Energieübertragungsvorrichtung (12) eine Messeinrichtung (46) aufweist, die zum Erfassen eines Kurzschlusses zwischen dem wenigstens einen Ausgangsanschluss (50a, 50b, 50c, 50c', 50d, 50e) und einem Spannungsversorgungspotential und/oder wenigstens einem weiteren Ausgangsanschluss und/oder einer Unterbrechung einer an dem wenigstens einen Ausgangsanschluss (50a, 50b, 50c, 50c', 50d, 50e) angeschlossenen elektrischen Leitung ausgebildet ist, wobei die Steuerungseinrichtung (42) dazu eingerichtet ist, auf das Erfassen des Kurzschlusses und/oder der Unterbrechung hin den jeweiligen Ausgangsschalter (S1, S2, S3, S4, S5, S6), der dem betroffenen Ausgangsanschluss (50a, 50b, 50c, 50c', 50d, 50e) zugeordnet ist, zu öffnen.

2. Energieübertragungsvorrichtung (12) nach Anspruch 1, wobei das Eingangsschaltmittel (S7) als Wahlschalter ausgebildet ist.

3. Energieübertragungsvorrichtung (12) nach Anspruch 1 oder 2, bei der die Steuerungseinrichtung (42) dazu ausgebildet ist, auf das Erfassen eines Unterschreitens eines Grenzwerts für die Höhe einer elektrischen Spannung und/oder für die Stärke eines elektrischen Stromes an dem ersten Eingangsanschluss (48a) und/oder dem zweiten Eingangsanschluss (48b) hin das Eingangsschaltmittel (S7) derart anzusteuern, dass ein Wechsel von dem ersten Eingangsanschluss (48a) zu dem zweiten Eingangsanschluss (48b) oder umgekehrt durchgeführt wird.

4. Energieübertragungsvorrichtung (12) nach einem der vorstehenden Ansprüche, wobei dem wenigstens einen Ausgangsanschluss (50a, 50b, 50c, 50c', 50d, 50e) ein Ausgangsschalter (S1, S2, S3, S4, S5, S6) zum Unterbrechen der elektrisch leitenden Verbindung des ersten Eingangsanschlusses (48a) und/oder des zweiten Eingangsanschlusses (48b) mit dem wenigstens einen Ausgangsanschluss zugeordnet ist.

5. Energieübertragungsvorrichtung (12) nach einem der vorstehenden Ansprüche, wobei dem wenigstens einen Ausgangsanschluss (50a, 50b, 50c, 50c', 50d, 50e) ein Stromrichtelement zugeordnet ist.

6. Energieübertragungsvorrichtung (12) nach einem der vorstehenden Ansprüche, die zur sternförmigen Versorgung der Verbraucher (34a, 34b, 34c, 34d, 34e) mit elektrischer Energie ausgebildet ist.

7. Energieübertragungsvorrichtung (12) nach einem der vorstehenden Ansprüche, die eine Datenschnittstelle (40) aufweist, die mit der Steuerungseinrichtung (42) verbunden ist.

8. Energieübertragungsvorrichtung (12) nach einem der vorstehenden Ansprüche, wobei die Energieübertragungsvorrichtung (12) einen Pufferspeicher (44) zur zumindest zeitweisen Versorgung zumindest der Energieübertragungsvorrichtung (12) mit elektrischer Energie aufweist.

9. Energieübertragungsvorrichtung (12) nach einem der vorstehenden Ansprüche, die dazu ausgebildet ist, einen Verbraucher (34c) zweikanalig über zwei Ausgangsanschlüsse (50c, 50c') mit elektrischer Energie zu versorgen.

10. Energieübertragungsvorrichtung (12) nach Anspruch 9, die zumindest zwei Ausgangsschalter (81, 82, 83, 84, 85, 86) aufweist, die als ein Wechselschalter (52) zur zweikanaligen Versorgung eines Verbrauchers (34c) mit elektrischer Energie konfigurierbar ausgebildet sind.

11. Bordnetz (2) mit einer Energieübertragungsvorrichtung (12) nach einem der vorstehenden Ansprüche.

## Claims

1. Energy transmission apparatus (12) comprising at least one first input connection (48a) and a second input connection (48b) for the at least two-channel feed of electrical energy to the energy transmission apparatus (12), and comprising at least one output connection (50a, 50b, 50c, 50c', 50d, 50e) for transferring the electrical energy to loads (34a, 34b, 34c, 34d, 34e), wherein the energy transmission apparatus (12) has an input switching means (S7), which is designed for the electrically conductive connection of the first input connection (48a) and/or the second input connection (48b) to the at least one output connection (50a, 50b, 50c, 50c', 50d, 50e), wherein the energy transmission apparatus (12) has a control device (42), which controls the operation of the energy transmission apparatus (12), wherein the energy transmission apparatus (12) has a measurement device (46), which is designed to detect a short circuit between the at least one output connection (50a, 50b, 50c, 50c', 50d, 50e) and a voltage supply potential and/or at least one further output connection and/or an interruption of an electrical line connected to the at least one output connection (50a, 50b, 50c, 50c', 50d, 50e), wherein the control device (42) is configured, as a result of the detection of the short circuit and/or the interruption, to open the respective output switch (S1, S2, S3, S4, S5, S6) with which the relevant output connection (50a, 50b, 50c, 50c', 50d, 50e) is associated.

2. Energy transmission apparatus (12) according to Claim 1, wherein the input switching means (S7) is designed as a selector switch.

3. Energy transmission apparatus (12) according to Claim 1 or 2, in which the control device (42) is designed, as a result of the detection of an undershooting of a limit value for the level of a voltage and/or for the intensity of an electric current at the first input connection (48a) and/or the second input connection (48b), to actuate the input switching means (S7) in such a way that a change is made from the first input connection (48a) to the second input connection (48b) or vice versa.

4. Energy transmission apparatus (12) according to one of the preceding claims, wherein an output switch (S1, S2, S3, S4, S5, S6) for interrupting the electrically conductive connection of the first input connection (48a) and/or the second input connection (48b) to the at least one output connection is associated with the at least one output connection (50a, 50b, 50c, 50c', 50d, 50e).

5. Energy transmission apparatus (12) according to one of the preceding claims, wherein a converting element is associated with the at least one output connection (50a, 50b, 50c, 50c', 50d, 50e).

6. Energy transmission apparatus (12) according to one of the preceding claims, which is designed for the star-connected supply of electrical energy to the loads (34a, 34b, 34c, 34d, 34e).

7. Energy transmission apparatus (12) according to one of the preceding claims, which has a data interface (40), which is connected to the control device (42).

8. Energy transmission apparatus (12) according to one of the preceding claims, wherein the energy transmission apparatus (12) has a buffer store (44) for the at least temporary supply of electrical power at least to the energy transmission apparatus (12).

9. Energy transmission apparatus (12) according to one of the preceding claims, which is designed to supply electrical energy to a load (34c) in two-channel fashion by means of two output connections (50c, 50c').

10. Energy transmission apparatus (12) according to Claim 9, which has at least two output switches (81, 82, 83, 84, 85, 86), which are designed so as to be able to be configured as a selector switch (52) for the two-channel supply of electrical energy to a load (34c).

11. Onboard power supply system (2) comprising an energy transmission apparatus (12) according to one of the preceding claims.

## Revendications

1. Ensemble (12) de transfert d'énergie présentant au moins une première borne d'entrée (48a) et une deuxième borne d'entrée (48b) qui permettent d'amener au moins par deux canaux de l'énergie électrique à l'ensemble (12) de transfert d'énergie, et présentant une ou plusieurs bornes de sortie (50a, 50b, 50c, 50c', 50d, 50e) qui transmettent l'énergie électrique à des consommateurs (34a, 34b, 34c, 34d, 34e),
l'ensemble (12) de transfert d'énergie présentant un moyen (S7) de commutation d'entrée configuré pour relier de manière électriquement conductrice la première borne d'entrée (48a) et/ou la deuxième borne d'entrée (48b) à la ou aux bornes de sortie (50a, 50b, 50c, 50c', 50d, 50e), l'ensemble (12) de transfert d'énergie présentant un dispositif de commande (42) qui commande le fonctionnement de l'ensemble (12) de transfert d'énergie, l'ensemble (12) de transfert d'énergie présentant un dispositif de mesure (46) configuré pour saisir un court-circuit entre la ou les bornes de sortie (50a, 50b, 50c, 50c', 50d, 50e) et un potentiel d'alimentation en tension et/ou une autre borne de sortie, et/ou une interruption d'un conducteur électrique raccordé à la ou aux bornes de sortie (50a, 50b, 50c, 50c', 50d, 50e), le dispositif de commande (42) étant conçu pour ouvrir le commutateur de sortie (S1, S2, S3, S4, S5, S6) associé à la borne de sortie (50a, 50b, 50c, 50c', 50d, 50e) lorsqu'il a saisi le court-circuit et/ou l'interruption.

2. Ensemble (12) de transfert d'énergie selon la revendication 1, dans lequel le moyen (S7) de commutation d'entrée est configuré comme commutateur sélecteur.

3. Ensemble (12) de transfert d'énergie selon les revendications 1 ou 2, dans lequel le dispositif de commande (42) est configuré pour commander le moyen (S7) de commutation d'entrée lors de la détection qu'une valeur limite du niveau d'une tension électrique et/ou dont l'intensité d'un courant électrique sur la première borne d'entrée (48a) et/ou la deuxième borne d'entrée (48b) n'est pas atteinte, de manière à réaliser une commutation de la première borne d'entrée (48a) à la deuxième borne d'entrée (48b) ou inversement.

4. Ensemble (12) de transfert d'énergie selon l'une des revendications précédentes, dans lequel un commutateur de sortie (S1, S2, S3, S4, S5, S6) qui interrompt la liaison électriquement conductrice entre la première borne d'entrée (48a) et/ou la deuxième borne d'entrée (48b) avec la ou les bornes de sortie est associé à la ou aux bornes de sortie (50a, 50b, 50c, 50c', 50d, 50e).

5. Ensemble (12) de transfert d'énergie selon l'une des revendications précédentes, dans lequel un élément redresseur de courant est associé à la ou aux bornes de sortie (50a, 50b, 50c, 50c', 50d, 50e).

6. Ensemble (12) de transfert d'énergie selon l'une des revendications précédentes, configuré pour alimenter en étoile les consommateurs (34a, 34b, 34c, 34d, 34e) en énergie électrique.

7. Ensemble (12) de transfert d'énergie selon l'une des revendications précédentes, présentant une interface de données (40) reliée au dispositif de commande (42).

8. Ensemble (12) de transfert d'énergie selon l'une des revendications précédentes, dans lequel l'ensemble (12) de transfert d'énergie présente une mémoire tampon (44) qui alimente au moins une partie du temps en énergie électrique au moins l'ensemble (12) de transfert d'énergie.

9. Ensemble (12) de transfert d'énergie selon l'une des revendications précédentes, configuré pour alimenter en énergie électrique un consommateur (34c) sur deux canaux par deux bornes de sortie (50c, 50c').

10. Ensemble (12) de transfert d'énergie selon la revendication 9, présentant au moins deux commutateurs de sortie (81, 82, 83, 84, 85, 86) configurés comme commutateurs inverseurs (52) configurables qui alimentent sur deux canaux un consommateur (34c) en énergie électrique.

11. Réseau de bord (2) doté d'un ensemble (12) de transfert d'énergie selon l'une des revendications précédentes.
